# EUROPEAN PATENT SPECIFICATION

(11) **EP 2 290 000 B1**
(45) Date of publication and mention of the grant of the patent: **23.05.2012**
(21) Application number: 09011087.5
(22) Date of filing: 28.08.2009
(51) Int. Cl.: C09J 167/06, C08L 67/08, C09J 167/08

(54) **Bio-based adhesive composition**
Klebstoffzusammensetzung auf biologischer Basis
Composition adhésive à base biologique

(43) Date of publication of application: 02.03.2011
(73) Proprietor: NITTO EUROPE N.V, 3600 Genk (BE); Nitto Denko Corporation, Ibaraki-shi Osaka 567-8680 (JP)
(72) Inventor: Vendamme, Richard, 3500 Hasselt (BE); Eevers, Walter, 3520 Zonhoven (BE)
(74) Representative: Grünecker, Kinkeldey, Stockmair & Schwanhäusser

(56) References cited:
- DATABASE WPI Week 200867 Thomson Scientific, London, GB; AN 2008-L39830 XP002564899 -& JP 2008 195819 A (NITTO DENKO CORP) 28 August 2008 (2008-08-28)

## Description

The present invention is directed to a bio-based composition and adhesive.

Adhesives are compounds in a liquid or semi-liquid state that can adhere or bond items together. Adhesives are usually derived from fossil fuel, i.e. non-regenerative resources. Because of rising oil prizes and environmental concerns, there is an increased demand for bio-based materials. Bio-based materials, such as polyesters polyols prepared by the polycondensation of plant-derived dicarboxylic acids and plant-derived diols have been employed in adhesive products because of their good technical properties and their sustainability as a renewable resource. However, in view of practical applications, the viscoelastic properties of these polymers need to be optimised by a cross-linking treatment. This cross-linking step is generally performed by treating the polyester with an isocyanate compound.

WO-2004/056901-A1 discloses an adhesive comprising polyisocyanate and a polyol comprising at least one dimer fatty acid and/or dimer fatty diol and the use as wood adhesive.

JP-2008-195819 discloses a polyester-based self-adhesive composition containing a chain-extended polyester which is produced by chain extending the polyester consisting of a dicarboxylic acid and diol by an isocyanate compound. The polyester-based self-adhesive can be prepared with a dicarboxylic acid and a diol which are both originated from plants. Among them, the plant-derived dicarboxylic acid may be a dimer acid and the plant-derived diol may be a dimer diol.

However, such combinations of plant-based polyesters and isocyanate cross-linkers have several drawbacks. Especially, it has been experimentally observed that the cured adhesive sheets display a hazy, translucent appearance after curing. Such a translucent character can be a serious drawback for various industrial applications where transparency is a key property, such as in packaging, surface protection and display applications.

The problem underlying the present invention is to provide a bio-based adhesive composition exhibiting a high optical transparency and good adhesive characteristics.

Said problem is solved by a bio-based composition comprising
a) a polycondensate of
   a1) a dimer of a fatty alcohol, and
   a2) a dimer of a fatty acid,
   and
b) an epoxidized fatty acid ester as a cross-linking agent,
   wherein the polycondensate and the epoxidized fatty acid ester are capable of reacting with each other.

In another embodiment, the present invention is directed to a bio-based adhesive obtainable by reacting
a) a polycondensate of
   a1) a dimer of a fatty alcohol, and
   a2) a dimer of a fatty acid,
   and
b) an epoxidized fatty acid ester as a cross-linking agent.

In a preferred embodiment in combination with any of the above or below embodiments, the fatty alcohol has from 14 to 22 carbon atoms.

The term "dimer of a fatty alcohol" as used herein refers to the dimerisation product of mono- or polyunsaturated fatty alcohols.

In another preferred embodiment in combination with any of the above or below embodiments, the dimer of a fatty alcohol is obtainable by hydrogenation of a dimer of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid and/or erucic acid.

Dimers of a fatty alcohol are commercially available for example from Croda (trade name PRIPOL 2033) or Cognis (SOVERMOL 908).

Both PRIPOL 2033 and SOVERMOL 908 are high purity, fully hydrogenated, and distilled aliphatic dimer alcohols. These products appear as colorless, clear viscous liquids. Their properties can be summarized as follows:
- Color (Gardner / DIN ISO 4630) < 1
- OH Value (DIN 53240) 200 - 212 mg KOH/g
- Acid Value (ISO 660) <= 0.2 mg KOH/g
- Water Content (ISO 2464) <= 0.2 %
- Viscosity at 25°C (ISO 2555) 1800 - 2800 mPa/s
- Functionality 2

In another preferred embodiment in combination with any of the above or below embodiments, component a1) is present in a concentration of 30 mol% to 55 mol%, preferably in a concentration of 40 mol% to 46 mol%.

In another preferred embodiment in combination with any of the above or below embodiments, the fatty acid has from 18 to 22 carbon atoms.

The term "dimer of a fatty acid" as used herein refers to the dimerisation product of mono- or polyunsaturated fatty acids and/or esters thereof.

In another preferred embodiment in combination with any of the above or below embodiments, the fatty acid is selected from the group consisting of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid and/or erucic acid.

Dimers of a fatty acid are commercially available. For example, dimers of oleic acid or linoleic acid are available from Croda (Gouda, The Netherlands) under the trade name PRIPOL 1009, or Cognis (Düsseldorf, Germany) under the trade names EMPOL 1008 or EMPOL 1016.

PRIPOL 1009 and EMPOL 1008 are high purity, fully hydrogenated, and distilled aliphatic dimer acids. These products appear as colorless to light colored, clear viscous liquids. Their properties can be summarized as follows:
- Color (Gardner / DIN ISO 4630) < 1
- Acid Value (ISO 660) 195 mg KOH/g
- Monobasic acids (HPLC %) max 2 %
- Dibasic Acids (HPLC %) min 95 %
- Polybasic Acids (HPLC %) 1 to 5 %
- Viscosity at 25°C, poise (ASTM 2196) 40 - 70

In another preferred embodiment in combination with any of the above or below embodiments, component a2) is present in a concentration of 45 mol% to 70 mol%, preferably in a concentration of 54 mol% to 60 mol%.

In another preferred embodiment in combination with any of the above or below embodiments, component a) is present in a concentration of 80 wt% to 99 wt%, preferably in a concentration of 90 wt% to 97.5 wt%.

In another preferred embodiment in combination with any of the above or below embodiments, the epoxidized fatty acid ester as a cross-linking agent is an epoxidized triglyceride, more preferably an epoxidized triglyceride of natural oils.

In another preferred embodiment in combination with any of the above or below embodiments, the triglyceride is a triglyceride of linseed oil, soybean oil, castor oil, palm kernel oil, sunflower oil, corn oil, cottonseed oil, perilla oil, rapeseed oil, olive oil, canola oil, palm oil, coconut oil, rice bran oil, safflower oil, sesame oil, tall oil, and/or mixtures thereof.

In another preferred embodiment in combination with any of the above or below embodiments, the number of epoxy groups in the epoxidized fatty acid ester is in the range of 2 to 6.

Triglycerides are the main component of natural oils and are composed of three fatty acids groups connected by a glycerol centre. Epoxidized triglycerides can be found as such in nature, for instance in Vernonia plants or can be conveniently synthesized from more common unsaturated oils by using a standard epoxidation process.

Epoxidized triglycerides are commercially available. For example, epoxidized linseed oil (ELO) is available from Cognis (Düsseldorf, Germany) under the trade name DEHYSOL B316 SPEZIAL, or Arkema (King of Prussia, Pennsylvania) under the trade name VIKOFLEX 7190.

An exemplary structure of an epoxidized triglyceride of linseed oil is as follows:

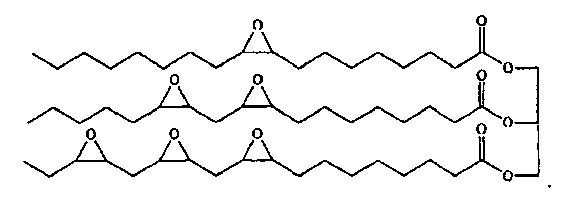

Epoxidized soybean oil (ESBO) is commercially available from Cognis (Düsseldorf, Germany) under the trade name DEHYSOL D82, or from Arkema (King of Prussia, Pennsylvania) under the trade name VIKOFLEX 7170.

The physical properties of DEHYSOL B316 SPEZIAL and DEHYSOL D82 are summarized in the following table.

| | DEHYSOL B316 SPEZIAL | DEHYSOL D82 |
|---|---|---|
| Chemical nature | Epoxidized linseed oil | Epoxidized soybean oil |
| Iodine Value (DIN 53241) | 0 - 7 g I/100g | 0 - 2.5 g I/100g |
| Acid Value (DIN EN ISO 2114) | 0 - 1 mg KOH/g | 0 - 0.3 mg KOH/g |
| Epoxy Oxygene (Q-C 1038) | 8.5 - 10 % | 6.5 - 7.0 % |
| Refractive Index at (DIN 51423) | 1.475 - 1.479 | 1.471 - 1.474 |
| Density at 25°C (DIN 51757) | 1.028 - 1.040 g/_{CM}³ | 0.993 - 0.999 g/cm³ |

In another preferred embodiment in combination with any of the above or below embodiments, component b) is present in a concentration of 1 wt% to 20 wt%, preferably in a concentration of 2.5 wt% to 10 wt%.

The adhesion force of the inventive bio-based composition or adhesive can be fine-tuned by varying the concentration of the epoxidized fatty acid ester as a cross-linking agent. Thus, the composition or adhesive is suitable for a wide range of potential applications. For instance, the adhesion force can be adjusted to be moderate, preferably below 100 cN/20mm, for temporal surface protection or the adhesion force can be adjusted to be high, preferably from 500 to 2,000 cN/20mm, for permanent bonding and joining applications.

In another preferred embodiment in combination with any of the above or below embodiments, the epoxidized fatty acid ester as a cross-linking agent is used in a concentration of 2.5 wt% to 7.5 wt%, more preferably 3 wt% to 7 wt%, in particular 4 wt% to 6 wt%. These ranges allow to prepare adhesive compositions with higher adhesion power such as from 500 to 2,000 cN/200mm for use in permanent bonding and joining applications.

In another preferred embodiment in combination with any of the above or below embodiments, the epoxidized fatty acid ester as a cross-linking agent is used in a concentration of 8 wt% to 15 wt%, more preferably 8.5 wt% to 10.5 wt%. These ranges allow preparing adhesive compositions with moderate adhesion power such as below 100 cN/200mm for use in temporal surface protection.

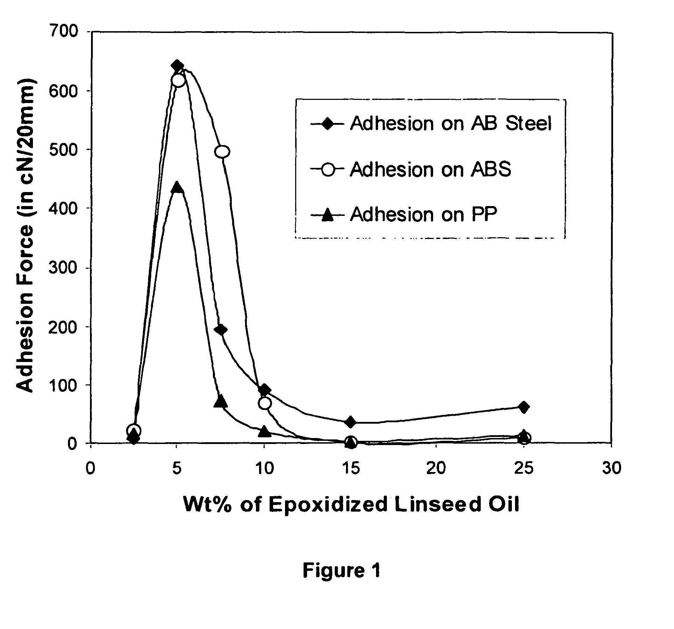

The effect of different concentrations of epoxidized fatty acid ester on the adhesion force is shown in Figure 1 for epoxidized linseed oil. For that specific example, we observe that a maximum of adhesion force is obtained for a concentration of epoxidized linseed oil around 5 wt%. The concentration of epoxidized triglyceride corresponding to a maximal adhesion depends on the nature of the polycondensate (molecular weight, branching degree, acid value) as well as the nature of the epoxidized oil (oxirane content, iodine value).

The adhesive (or adhesion) strength was measured by a 180°C peel test. This type of testing determines the force that is necessary to tear a strip of a tape from a standard surface at a constant speed. The result is the force referred to the width of the tape. Samples for the peel test were prepared as follows. At first, the biobased adhesive composition is coated on a carrier film (for instance PET) and cured as described in Examples 6 to 13. Then, 2 cm wide, 10 cm long pieces of adhesive tapes are cut and placed on a table (the adhesive face on top). Half of the tape length is then covered with a second strip of plastic film (this film should be identical to the carrier film on which the adhesive composition has been previously coated). Then, this assembly is turned upside down and the free adhesive domain is applied manually on the reference surface (for instance AB steel). A two kg cylinder is rolled twice on the tape in order to ensure a good contact between the adhesive and the reference surface. A dwell time of 15 minutes is observed prior to performing the peeling test. The peel test is performed on a Zwick Z005 testing machine with a constant peeling speed of 300 mm/min.

In a preferred embodiment in combination with any of the above or below embodiments, a1) further contains a trimer of a fatty alcohol. In a preferred embodiment in combination with any of the above or below embodiments, a1) contains 0.05 mol% to 20 mol%, more preferably 0.1 mol% to 10 mol%, in particular 0.2 mol% to 5 mol% of a trimer of a fatty alcohol.

The term "trimer of a fatty alcohol" as used herein refers to the trimerisation product of mono- or polyunsaturated fatty alcohols.

In another preferred embodiment in combination with any of the above or below embodiments, the trimer of a fatty alcohol is obtainable by hydrogenation of a trimer of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid and/or erucic acid.

In a preferred embodiment in combination with any of the above or below embodiments, a1) further contains a saturated hydrocarbon diol possessing an aliphatic chain containing 3 to 10 carbon atoms. Typical examples of such diols are 1,3-propanediol, 1,9-nonanediol or 1,10-decanediol. In a preferred embodiment in combination with any of the above or below embodiments, a1) contains 0.05 mol% to 50 mol%, more preferably 2 mol% to 20 mol%, in particular 5 mol% to 15 mol% of the saturated hydrocarbon diol. The saturated hydrocarbon diol is preferably derived from renewable resources. For instance, 1,3-propanediol is obtained from the conversion of biomass sugars by fermentation and catalytic processing, and 1,10-decanediol is a renewable resource derived from castor oil.

In a preferred embodiment in combination with any of the above or below embodiments, a1) further contains glycerol. In a preferred embodiment in combination with any of the above or below embodiments a1) contains 0.02 mol% to 20 mol%, more preferably 1 mol% to 15 mol%, in particular 3 to 11 mol% of glycerol. Glycerol is one of the main components of natural oils and may serve as a branching agent in the present invention.

In a preferred embodiment in combination with any of the above or below embodiments, a2) further contains a trimer of a fatty acid. In a preferred embodiment in combination with any of the above or below embodiments, a2) contains 0.05 mol% to 20 mol%, more preferably 0.5 mol% to 15 mol%, in particular 1 to 10 mol% of a trimer of a fatty acid. The use of a trimer of a fatty acid allows to enhance the functionality of the polymer and to facilitate the subsequent cross-linking process.

The term "trimer of a fatty acid" as used herein refers to the trimerisation product of mono- or polyunsaturated fatty acids and/or esters thereof.

Trimers of a fatty acid are obtain as by-products during the dimerization fatty acids, for example oleic acid or linoleic acid, and can be isolated by distillation. Such trimer acids are commercially available for example from Croda under the trade name PRIPOL 1017 (mixture: 75 wt% dimer acid / 25 wt% trimer acid) or PRIPOL 1040 (mixture: 25 wt% dimer acid / 75 wt% trimer acid), and from Cognis (EMPOL 1045 or EMPOL 1043).

PRIPOL 1040 and EMPOL 1045 are fully hydrogenated trimer acids with a polybasic acid content typically more than 70%, and are useful in applications where branching is desired. Their properties can be summarized as follows:
- Acid Value (ISO 660) 180 - 200 mg KOH/g
- Monobasic acids (HPLC %) max 5 %
- Dibasic Acids (HPLC %) 0 - 40 %
- Polybasic Acids (HPLC %) 60 - 90 %
- Viscosity at 25°C, poise (ASTM 2196) 200 - 500

In a preferred embodiment in combination with any of the above or below embodiments, a2) further contains a saturated hydrocarbon dicarboxylic acid possessing an aliphatic chain containing from 3 to 10 carbon atoms. Typical examples of such dicarboxylic acids are succinic acid, sebacic acid, or azelaic acid. In a preferred embodiment in combination with any of the above or below embodiments, a2) contains 0.05 mol% to 50 mol%, more preferably 5 mol% to 25 mol%, in particular 10 to 20 mol% of a saturated dicarboxylic acid. The saturated hydrocarbon dicarboxylic acid is preferably derived from renewable resources. For instance, succinic acid is produced by fermentation of sugars, and azelaic acid is obtained industrially by ozonolysis of oleic acid. Renewable azelaic acid is commercially available from Cognis (Düsseldorf, Germany) under the trade names Emerox 1110 or Emerox 1144.

In another preferred embodiment in combination with any of the above or below embodiments, the adhesive has a glass transition temperature (Tg) of less than or equal to -20 °C. As used herein, the glass transition temperature is determined using Differential Scanning Calorimetry. For the DSC analysis, the samples were first cooled to -100°C and then heated up to 50°C (heating ramp + 10°C/min) in a nitrogen atmosphere.

In another preferred embodiment in combination with any of the above or below embodiments, the adhesive has a number of free carboxylic acid groups in the range of 1 to 150 mg KOH/g and a number of free hydroxyl groups in the range of 1 to 150 mg KOH/g. The acid value is defined as the number of mg of potassium hydroxide required to neutralize the free fatty acids in 1 g of sample, and was measured by direct titration with a standard potassium hydroxide solution. The hydroxyl value is defined as the number of mg of potassium hydroxide equivalent to the hydroxyl content of 1 g of sample, and is measured by acetylation followed by hydrolysation of excess acetic anhydride. The acetic acid formed is subsequently titrated with an ethanolic potassium hydroxide solution.

In another embodiment, the invention is directed to a method for preparing the bio-based adhesive, comprising reacting in a solvent
a) a polycondensate of
   a1) a dimer of a fatty alcohol, and
   a2) a dimer of a fatty acid; and
b) an epoxidized fatty acid ester as a cross-linking agent.

In another preferred embodiment in combination with any of the above or below embodiments, the polycondensate is obtainable by reacting the dimer of a fatty alcohol and the dimer of a fatty acid at 160°C to 250°C, more preferably at 170°C to 190°C, in particular at about 180°C. The reaction can be performed without solvent if the viscosity of the polyester remains low, i.e. if the molecular weight of the polyester remains low (typically lower than 30,000 g/mol). The advantage of performing the reaction without solvent, i.e. in bulk, is that the carbon footprint of the inventive bio-based composition or adhesive can be further lowered.

In another preferred embodiment in combination with any of the above or below embodiments, the polycondensate is obtainable by reacting the dimer of a fatty alcohol and the dimer of a fatty acid in a solvent, more preferably in an aromatic hydrocarbon solvent, in particular an aromatic hydrocarbon solvent having a boiling point higher than 110°C. The aromatic hydrocarbon solvent is preferably toluene or xylene, most preferably xylene. In another preferred embodiment in combination with any of the above or below embodiments, the solvent is used in a concentration of 0 to 8 wt%, preferably 0 to 4 wt%, more preferably 1 to 3 wt%, in particular about 2 wt%. In another preferred embodiment in combination with any of the above or below embodiments, a vacuum is applied during the polycondensation reaction in order to facilitate the extraction of water and to speed up the reaction. In another preferred embodiment in combination with any of the above or below embodiments, the polycondensation reaction is conducted in the presence of a polymerization catalyst. Such catalysts are well known in the art and can be for instance dibutyltin oxide, titanium tetrabutoxide, 1,5,7-triazabicyclo[4.4.0]dec-5-ene (TBD), 1,5-diazabicyclo[4.3.0]non-5-ene (DBN), 1,8-diazabicyclo[5.4.0]undec-7-ene (DBU). In another preferred embodiment in combination with any of the above or below embodiments, the polycondensation catalyst is present in a concentration of 0.01 mol% to 0.1 mol%.

The same preferred reaction temperature, solvent and/or concentration of solvent are applicable if a1) further contains a trimer of a fatty alcohol, a saturated hydrocarbon diol, and/or glycerol; and/or a2) further contains a trimer of a fatty acid and/or a saturated hydrocarbon dicarboxylic acid.

In another preferred embodiment in combination with any of the above or below embodiments, the method for preparing the bio-based adhesive comprises reacting the polycondensate and the epoxidized fatty acid ester as a cross-linking agent in a solvent, wherein the solvent is an aromatic hydrocarbon solvent. The aromatic hydrocarbon solvent is preferably toluene or xylene.

In another preferred embodiment in combination with any of the above or below embodiments, the method for preparing the bio-based adhesive comprises reacting the polycondensate and the epoxidized fatty acid ester as a cross-linking agent in a solvent, wherein the concentration of polycondensate and epoxidized fatty acid ester is 20 to 99 wt%.

In another preferred embodiment in combination with any of the above or below embodiments, a catalyst is used in the reaction between polycondensate and epoxidized fatty acid ester as a cross-linking agent. Suitable catalysts for this ring-opening polymerization belong to the class of strong Lewis acids and are well known in the art. Preferably, the catalyst is selected from the group consisting of sodium carbonate, organo metallic compounds such as lithium neodecanoate, a zinc complex, tertiary amines, hexadecyltrimethylammonium bromine, or triphenyl phosphine oxide. Zinc complex catalysts are commercially available from King Industries, Inc. (Norwalk, Connecticut) under the tradename NACURE XC-9206. It is advantageous to employ a reaction catalyst in order to ensure a rapid and complete curing of the epoxy-carboxyl system.

In another preferred embodiment in combination with any of the above or below embodiments, the method for preparing the bio-based adhesive comprises reacting the polycondensate and the epoxidized fatty acid ester as a cross-linking agent in a solvent, and using said reaction mixture as a coating solution. In another preferred embodiment in combination with any of the above or below embodiments, said coating solution is laminated on a sheet or a film.

In another embodiment, the invention is directed to the use of the adhesive for laminating a sheet or a film. The sheet or film is preferably fossil-based or bio-based. It is possible to obtain a fully bio-based tape structure by laminating the bio-based adhesive composition onto a bio-based carrier film.

The fossil-based plastic sheet or film is preferably made from poly(ethylene terephthalate) (PET), polyethylene (PE), polyvinyl chloride (PVC), and/or polypropylene (PP). The bioplastic sheet or film is preferably made from cellulose, starch, and/or polylactic acid (PLA).

In another preferred embodiment in combination with any of the above or below embodiments, the sheet or film is made from poly(ethylene terephthalate), polyethylene, polypropylene, cellulose, starch and/or polylactic acid.

Cellulose-based films are commercially available for example from Innovia Films under the trade name NatureFlex. Polylactic acid-based films are commercially available for example from Nordenia Technologies. Preferably, a modified-PLA film with enhanced temperature resistance is used.

The bio-based adhesive of the present invention shows a high miscibility, high compatibility and a similar refractive index between the base polymer and the cross-linking agent allowing the production of an adhesive sheet or film having a high optical transparency.

The following examples further describe the invention.

### EXAMPLES

### Example 1: Synthesis of a linear polyester based on a dimer fatty acid and a dimer fatty diol

PRIPOL 1009 (133 g, 229.79mmol), PRIPOL 2033 (130.37 g, 227.22 mmol) and xylene (26.34 g, 30.5 ml) were weighed into a 1 l I cylindrical glass jacketed reactor vessel. The reactor was fitted with an Allihn reflux condenser and a Dean-Stark type condenser to collect the water created during the polycondensation reaction. During the experiment, the set-up was continuously flushed with inert gas (nitrogen) to limit oxidation and facilitate transport of water vapor. While stirring, the mixture was heated from room temperature to 180°C in 1 h using a heating mantle and a U-shaped mechanical stirrer.

After 4 hours, the catalyst dibutyltin oxide was introduced in the reaction mixture (0.1 mol%). The temperature was then maintained at 180°C for 16 hours in order to complete the polymerization. The polymer was discharged from the reactor and left to cool. The resulting polyester had a glass transition temperature (Tg) of -50.4°C (determined by Differential Scanning Calorimetry), a weight average molecular weight (Mw) of 85000 g/mol (determined by Gel Permeation Chromatography), and an acid value of 1.8 mg KOH/g.

### Example 2: Bulk (solvent-free) synthesis of a linear polyester based on a dimer fatty acid and a dimer fatty diol

PRIPOL 1009 (150.77 g, 260.46 mmol), PRIPOL 2033 (112.63 g, 196.28 mmol) were weighed into a 1 I cylindrical glass jacketed reactor vessel. The polycondensation was then performed as described in Example 1. The resulting polyester had a glass transition temperature (Tg) of -51.2°C, a weight average molecular weight (Mw) of 14156 g/mol (determined by Gel Permeation Chromatography), and an acid value of 31.5 mg KOH/g.

### Example 3: Synthesis of a linear polyester based on a dimer fatty acid, a dimer fatty diol and succinic acid as a co-monomer

PRIPOL 1009 (114.52 g, 197.84 mmol), PRIPOL 2033 (139.71 g, 243.48 mmol) and succinic acid (9.16 g, 77.57 mmol) were weighed into a 1 l cylindrical glass jacketed reactor vessel. The polycondensation was then performed as described in Example 1. The resulting polyester had a glass transition temperature (Tg) of -47.4°C.

### Example 4: Bulk synthesis of a branched polyester using a trimer fatty acid as a branching agent

PRIPOL 1009 (131.17 g, 226.61 mmol), PRIPOL 2033 (112.81 g, 196.60 mmol) and PRIPOL 1040 (19.41 g, 25.32 mmol) were weighed into a 1 l cylindrical glass jacketed reactor vessel. The reactor was fitted with an Allihn reflux condenser and a Dean-Stark type condenser to collect the water created during the polycondensation reaction. During the experiment, the set-up was continuously flushed with inert gas (nitrogen) to limit oxidation and facilitate transport of water vapor. While stirring, the mixture was heated from room temperature to 180°C in 1 h using a heating mantle and a U-shaped mechanical stirrer.

After 4 hours, the catalyst dibutyltin oxide was introduced in the reaction mixture (0.1 mol%). The temperature was then maintained at 180°C for 16 hours. Subsequently, the polymer was discharged from the reactor and left to cool. The resulting polyester had a glass transition temperature (Tg) of -50°C (determined by Differential Scanning Calorimetry), a weight average molecular weight (Mw) of 21844 g/mol (determined by Gel Permeation Chromatography), and an acid value of 27.95 mg KOH/g.

### Example 5: Bulk synthesis of a branched polyester using glycerol as a branching agent

PRIPOL 1009 (163.9 g, 283.15 mmol), PRIPOL 2033 (96.7 g, 168.52 mmol) and glycerol (2.79 g, 30.79 mmol) were weighed into a 1 l cylindrical glass jacketed reactor vessel. The polymerization was conducted as described in example 1. The resulting polymer had a weight average molecular weight of 12,599 g/mol.

### Example 6: Adhesive composition using epoxidized linseed oil (ELO) as a cross-linking agent

27.08 g of Polymer 1 (synthesized in Example 1) were mixed with 380 mg of DEHYSOL B316 SPEZIAL (ELO), 200 mg of NACURE XC-9206 (curing catalyst obtained from King Industries), and 22.29 g of xylene. The solid base of this coating composition (expressed in wt% of adhesive relative to the total solution) was 50 wt%. Once the solution had been homogenised, a 80 µm adhesive layer (wet thickness) was roll-coated manually at room temperature with an approximative speed of 50 cm/s on a 50 µm thick polyethylene terephtalate (PET) film, and this bilayer stack was dried and cured in an oven at 155°C for 15 minutes.

This resulted in a very tacky film suitable for pressure sensitive adhesive (PSA) applications. The dry thickness of the adhesive layer was 40 µm. The adhesive strength, as measured by a 180° peel test to panels after double rolling of a two kg cylinder on the tape and a subsequent dwell time of 15 minutes, was 1435 cN/20mm from AB Steel, 1520 cN/20mm from acrylonitrile butadiene styrene (ABS), and 1178 cN/20mm from polypropylene (PP).

### Example 7: Adhesive composition using epoxidized linseed oil (ELO) as a cross-linking agent

22.32 g of Polymer 2 (synthesized in Example 2) were mixed with 2.50 g of DEHYSOL B316 SPEZIAL (ELO), 278 mg of NACURE XC-9206, and 10.65 g of xylene. The solid base of this coating composition (expressed in wt% of adhesive relative to the total solution) was 70 wt%. Once the solution had been homogenised, a 40 µm adhesive layer (wet thickness) was roll-coated manually at room temperature with an approximative speed of 50 cm/s on a 50 µm thick polyethylene terephtalate (PET) film, and this bilayer stack was dried and cured in an oven at 155°C for 15 minutes. This resulted in a tacky film suitable for pressure sensitive adhesive (PSA) applications. The dry thickness of the adhesive layer was 28 µm. The adhesive strength, as measured by a 180° peel test to panels after double rolling of a two kg cylinder on the tape and a subsequent dwell time of 15 minutes, was 282.46 cN/20mm from AB Steel, 335.48 cN120mm from acrylonitrile butadiene styrene (ABS), and 49.25 cN/20mm from polypropylene (PP).

### Example 8: Adhesive composition using epoxidized linseed oil (ELO) as a cross-linking agent

23.57 g of **Polymer 4** (synthesized in Example 4) were mixed with 1.25 g of DEHYSOL B316 SPEZIAL (ELO), 278 mg of NACURE XC-9206, and 10.65 g of xylene. The solid base of this coating composition (expressed in wt% of adhesive relative to the total solution) was 70 wt%. Once the solution had been homogenised, a 40 µm adhesive layer (wet thickness) was roll-coated manually at room temperature with an approximative speed of 50 cm/s on a 50 µm thick polyethylene terephtalate (PET) film, and this bilayer stack was dried and cured in an oven at 155°C for 15 minutes.

This resulted in a very tacky film suitable for pressure sensitive adhesive (PSA) applications. The dry thickness of the adhesive layer was 28 µm. The adhesive strength, as measured by a 180° peel test to panels after double rolling of a two kg cylinder on the tape and a subsequent dwell time of 15 minutes, was 643.3 cN/20mm from AB Steel, 619.58 cN/20mm from acrylonitrile butadiene styrene (ABS), and 438.49 cN/20mm from polypropylene (PP).

### Experiment 9: Fine-tuning of the adhesion force

Example 8 was repeated whereby the concentration of epoxidized linseed oil was increased in a step-wise manner from 2.5 wt% to 25 wt%. The effect of the concentration of the cross-linking agent on the adhesion force of the bio-based adhesive composition on various substrates (AB Steel, ABS, and PP) is shown in Figure 1. For this specific system, a maximal adhesion is obtained for a concentration of epoxidized linseed oil of 5 wt%.

### Example 10: Adhesive composition using epoxidised soybean oil (ESBO) as a cross-linking agent

21.82 g of **Polymer 4** (synthesized in Example 4) were mixed with 3.00 g of DEHYSOL D82 (ESBO), 278 mg of NACURE XC-9206, and 10.65 g of xylene. The solid base of this coating composition (expressed in wt% of adhesive relative to the total solution) was 70 wt%. Once the solution had been homogenised, a 40 µm adhesive layer (wet thickness) was roll-coated manually at room temperature with an approximative speed of 50 cm/s on a 50 µm thick polyethylene terephtalate (PET) film, and this bilayer stack was dried and cured in an oven at 155°C for 15 minutes. This resulted in a very tacky film suitable for pressure sensitive adhesive (PSA) applications. The dry thickness of the adhesive layer was 28 µm. The adhesive strength, as measured by a 180° peel test to panels after double rolling of a two kg cylinder on the tape and a subsequent dwell time of 15 minutes, was 415.60 cN/20mm from AB Steel, 375.73 cN/20mm from acrylonitrile butadiene styrene (ABS), and 227.14 cN/20mm from polypropylene (PP).

### Example 11: Adhesive composition using epoxidised castor oil (ECO) as a cross-linking agent

*Synthesis of Epoxidized Castor Oil.* Castor oil (91.8 g, 0.14 mol), glacial acetic acid (21.0 g, 0.35 mol), Amberlite (23 g), and toluene (40 g) were charged into in a round, four-necked 500 ml flask equipped with a mechanical stirrer, thermometer sensor, and reflux condenser. The mixture was heated to a constant temperature of 55.8°C. Then, 30% H₂O₂ (56.7 g, 0.5 mol) was added slowly and allowed to react at 55.8°C for 7 h. Subsequently, the crude product was filtered and washed with a saturated solution of NaCO₃ and distilled water, and then dried with anhydrous sodium sulfate. Finally, the toluene was removed by distillation under a vacuum oven at 80.8°C for 2 h (yield, 84%).

21.06 g of **Polymer 4** (synthesized in Example 4) were mixed with 3.75 g of epoxidized castor oil (ECO), 278 mg of NACURE XC-9206, and 10.65 g of xylene. The solid base of this coating composition (expressed in wt% of adhesive relative to the total solution) was 70 wt%. After the solution had been homogenised, a 40 µm adhesive layer (wet thickness) was roll-coated manually at room temperature with an approximative speed of 50 cm/s on a 50 µm thick polyethylene terephtalate (PET) film, and this bilayer stack was dried and cured in an oven at 155°C for 15 minutes. This resulted in a very tacky film suitable for pressure sensitive adhesive (PSA) applications. The adhesive strength as measured by a 180° peel test to panels after double rolling of a two kg cylinder on the tape and a subsequent dwell time of 15 minutes resulted in a force of 543.21 cN/20mm from AB Steel.

### Example 12: Coating of the bio-based composition on a cellulose-based carrier film

An adhesive composition was prepared as described in Example 8, and was subsequently roll-coated manually at room temperature with an approximative speed of 50 cm/s on a 45 µm-thick cellulose film (trade name "NatureFlex 45NK"). After a curing time of 15 minutes at 155°C, a tacky film suitable for pressure sensitive adhesive (PSA) applications was obtained. The adhesive strength as measured by a 180° peel test to panels after double rolling of a two kg cylinder on the tape and a subsequent dwell time of 15 minutes resulted in a force of 720.45 cN/20mm from AB Steel.

### Example 13: Coating of the bio-based composition on a polylactic acid (PLA)-based carrier film

An adhesive composition was prepared as described in Example 8, and was subsequently roll-coated manually at room temperature with an approximative speed of 50 cm/s on a 50 µm-thick PLA film (TK29505 from Nordenia Technologies). After a curing time of 15 minutes at 155°C, a tacky film suitable for pressure sensitive adhesive (PSA) applications was obtained.

### Example 14: Superior optical appearance of the bio-based adhesive compositions

The adhesive compositions of Examples 6 to 11 displayed an excellent transparency. This excellent transparency results from a good miscibility of the base polymer with the cross-linking agent and a similar refractive index between the base polymer and the cross-linking agent, as shown in Table 1 for the bio-based compositions A and B.

Adhesive composition A was prepared by mixing 18.86 g of Polymer 1 (as prepared in Example 1) with 1 g of Dehysol B316 Spezial, 222 mg of Nacure XC-9206 and 8.51 g of Xylene. The solid base of this coating composition (expressed in wt% of adhesive relative to the total solution) was 50 wt%. Once the solution had been homogenised, a 80 µm adhesive layer (wet thickness) was roll-coated manually at room temperature with an approximative speed of 50 cm/s on a 50 µm thick polyethylene terephtalate (PET) film, and this bilayer stack was dried and cured in an oven at 155°C for 15 minutes.

Adhesive composition B was prepared by mixing 18.86 g of Polymer 1 (as prepared in Example 1) with 1 g of Dehysol D82, 222 mg of Nacure XC-9206 and 8.51 g of Xylene. The solid base of this coating composition (expressed in wt% of adhesive relative to the total solution) was 50 wt%. Once the solution had been homogenised, a 80 µm adhesive layer (wet thickness) was roll-coated manually at room temperature with an approximative speed of 50 cm/s on a 50 µm thick polyethylene terephtalate (PET) film, and this bilayer stack was dried and cured in an oven at 155°C for 15 minutes.

In contrast, petroleum-based isocyanate cross-linking agents generally have a higher refractive index and a limited miscibility with the base polyester. This results in a moderate transparency or in a hazy appearance of the cured adhesive compositions, as shown in Table 1 for comparative compositions C and D.

Adhesive composition C was prepared by mixing 18.86 g of Polymer 1 (as prepared in Example 1) with 1 g of toluene diisocyanate and 8.51 g of Xylene. The solid base of this coating composition (expressed in wt% of adhesive relative to the total solution) was 50 wt%. Once the solution had been homogenised, a 80 µm adhesive layer (wet thickness) was roll-coated manually at room temperature with an approximative speed of 50 cm/s on a 50 µm thick polyethylene terephtalate (PET) film, and this bilayer stack was dried and cured in an oven at 130°C for 5 minutes.

Adhesive composition D was prepared by mixing 18.86 g of Polymer 1 (as prepared in Example 1) with 1 g of a trifunctional isocyanate and 8.51 g of Xylene. The solid base of this coating composition (expressed in wt% of adhesive relative to the total solution) was 50 wt%. Once the solution had been homogenised, a 80 µm adhesive layer (wet thickness) was roll-coated manually at room temperature with an approximative speed of 50 cm/s on a 50 µm thick polyethylene terephtalate (PET) film, and this bilayer stack was dried and cured in an oven at 130°C for 5 minutes.

**Table 1. Comparison of the optical appearances of adhesive compositions cross-linked with bio-based epoxidized triglycerides and petroleum-based isocyanates**

| Composition | Base Polymer | Polymer Refractive Index | Cross-linking Agent | Cross-linking agent Refractive Index | Appearance |
|---|---|---|---|---|---|
| Bio-based composition A | Polymer 1 (see example 1) | 1.465 | Epoxidized Linseed Oil | 1.4777 | Excellent transparency |
| Bio-based composition B | Polymer 1 (see example 1) | 1.465 | Epoxidized Soybean Oil | 1.474 | Excellent transparency |
| Comparative composition C | Polymer 1 (see example 1) | 1.465 | Toluene Diisocyanate | 1.566 | Moderate transparency |
| Comparative composition D | Polymer 1 (see example 1) | 1.465 | Tri-functional isocyanate | 1.641 | Translucent (hazy) |

## Claims

1. A bio-based composition comprising
a) a polycondensate of
a1) a dimer of a fatty alcohol, and
a2) a dimer of a fatty acid,
and
b) an epoxidized fatty acid ester as a cross-linking agent,
wherein the polycondensate and the epoxidized fatty acid ester are capable of reacting with each other.

2. A bio-based adhesive obtainable by reacting
a) a polycondensate of
a1) a dimer of a fatty alcohol, and
a2) a dimer of a fatty acid,
and
b) an epoxidized fatty acid ester as a cross-linking agent.

3. The composition or adhesive of claim 1 or 2, wherein
a1) further contains a saturated hydrocarbon diol containing 3 to 10 carbon atoms, a trimer of a fatty alcohol, and/or glycerol; and/or
a2) further contains a saturated hydrocarbon dicarboxylic acid containing 3 to 10 carbon atoms, and/or a trimer of a fatty acid.

4. The composition or adhesive of any of claims 1 to 3, wherein the fatty alcohol has from 14 to 22 carbon atoms.

5. The composition or adhesive of any of claims 1 to 4, wherein the dimer or trimer of a fatty alcohol is obtainable by hydrogenation of a dimer or trimer of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid, and/or erucic acid.

6. The composition or adhesive of any of claims 1 to 5, wherein the fatty acid has from 18 to 22 carbon atoms.

7. The composition or adhesive of any of claims 1 to 6, wherein the fatty acid is selected from the group consisting of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid and/or erucic acid.

8. The composition or adhesive of any of claims 1 to 7, wherein the epoxidized fatty acid ester is an epoxidized triglyceride.

9. The composition or adhesive of claim 8, wherein the triglyceride is a triglyceride of linseed oil, soybean oil, castor oil, palm kernel oil, sunflower oil, corn oil, cottonseed oil, perilla oil, rapeseed oil, olive oil and/or canola oil, palm oil, coconut oil, rice bran oil, safflower oil, sesame oil, tall oil, and mixtures thereof.

10. The composition or adhesive of any of claims 1 to 9, wherein the number of epoxy groups in the epoxidized fatty acid ester is in the range of 2 to 6.

11. The adhesive of any of claims 2 to 9, having a glass transition temperature (T_{g}) of less than or equal to -20 °C.

12. The adhesive of any of claims 2 to 10, having a number of free carboxyl groups in the range of 1 to 150 mgKOH/g.

13. A method for preparing the bio-based adhesive of claims 2 to 12, comprising reacting in a solvent
a) a polycondensate of
a1) a dimer of a fatty alcohol, and
a2) a dimer of a fatty acid,
and
b) an epoxidized fatty acid ester as a cross-linking agent.

14. Use of the adhesive according any of claims 2 to 12 for laminating a sheet or a film.

15. The use according to claim 14, wherein the sheet or film is made from poly(ethylene terephthalate), polyethylene, polyvinyl chloride, polypropylene, cellulose, starch and/or polylactic acid.

## Patentansprüche

1. Zusammensetzung auf biologischer Basis umfassend
a) ein Polykondensat von
a1) einem Dimer von einem Fettalkohol, und
a2) einem Dimer von einer Fettsäure,
und
b) einen epoxidierten Fettsäureester als Vernetzungsmittel,
wobei das Polykondensat und der epoxidierte Fettsäureester miteinander reagieren können.

2. Klebstoff auf biologischer Basis erhältlich durch Umsetzen von
a) einem Polykondensat von
a1) einem Dimer von einem Fettalkohol, und
a2) einem Dimer von einer Fettsäure,
und
b) einem epoxidierten Fettsäureester als Vernetzungsmittel.

3. Zusammensetzung oder Klebstoff nach Anspruch 1 oder 2, wobei
a1) außerdem ein gesättigtes Kohlenwasserstoffdiol, das 3 bis 10 Kohlenstoffatome enthält, ein Trimer von einem Fettalkohol und/oder Glycerin enthält; und/oder
a2) außerdem eine gesättigte Kohlenwasserstoffdicarbonsäure, die 3 bis 10 Kohlenstoffatome enthält, und/oder ein Trimer von einer Fettsäure enthält.

4. Zusammensetzung oder Klebstoff nach einem der Ansprüche 1 bis 3, wobei der Fettalkohol 14 bis 22 Kohlenstoffatome aufweist.

5. Zusammensetzung oder Klebstoff nach einem der Ansprüche 1 bis 4, wobei das Dimer oder Trimer von einem Fettalkohol erhältlich ist durch Hydrierung eines Dimers oder Trimers von Ölsäure, Linolsäure, Palmitoleinsäure, Linolensäure, Elaeostearinsäure, Ricinolsäure, Vernolsäure, Licansäure, Myristoleinsäure, Margaroleinsäure, Gadoleinsäure, Eicosadiensäure, und/oder Erucasäure.

6. Zusammensetzung oder Klebstoff nach einem der Ansprüche 1 bis 5, wobei die Fettsäure 18 bis 22 Kohlenstoffatome aufweist.

7. Zusammensetzung oder Klebstoff nach einem der Ansprüche 1 bis 6, wobei die Fettsäure ausgewählt ist aus der Gruppe bestehend aus Ölsäure, Linolsäure, Palmitoleinsäure, Linolensäure, Elaeostearinsäure, Ricinolsäure, Vernolsäure, Licansäure, Myristoleinsäure, Margaroleinsäure, Gadoleinsäure, Eicosadiensäure und/oder Erucasäure.

8. Zusammensetzung oder Klebstoff nach einem der Ansprüche 1 bis 7, wobei der epoxidierte Fettsäureester ein epoxidiertes Triglycerid ist.

9. Zusammensetzung oder Klebstoff nach Anspruch 8, wobei das Triglycerid ein Triglycerid von Leinöl, Sojaöl, Rizinusöl, Palmkernöl, Sonnenblumenöl, Maisöl, Baumwollsamenöl, Perillaöl, Rapsöl, Olivenöl und/oder Canolaöl, Palmöl, Kokosnußöl, Reisöl, Safloröl, Sesamöl, Tallöl und Mischungen davon ist.

10. Zusammensetzung oder Klebstoff nach einem der Ansprüche 1 bis 9, wobei die Anzahl der Epoxygruppen in dem epoxidierten Fettsäureester im Bereich von 2 bis 6 liegt.

11. Klebstoff nach einem der Ansprüche 2 bis 9 mit einer Glasübergangstemperatur (T_{g}) von weniger als oder gleich -20°C.

12. Klebstoff nach einem der Ansprüche 2 bis 10 mit einer Anzahl von freien Carboxylgruppen im Bereich von 1 bis 150 mgKOH/g.

13. Verfahren zum Herstellen des Klebstoffs auf biologischer Basis nach den Ansprüchen 2 bis 12, umfassend das Umsetzen in einem Lösungsmittel von
a) einem Polykondensat von
a1) einem Dimer von einem Fettalkohol, und
a2) einem Dimer von einer Fettsäure,
und
b) einem epoxidierten Fettsäureester als Vernetzungsmittel.

14. Verwendung des Klebstoffs nach einem der Ansprüche 2 bis 12 zum Laminieren einer Folie oder eines Films.

15. Verwendung nach Anspruch 14, wobei die Folie oder der Film aus Poly(ethylenterephthalat), Polyethylen, Polyvinylchlorid, Polypropylen, Cellulose, Stärke und/oder Polymilchsäure gefertigt ist.

## Revendications

1. Composition à base biologique comprenant
a) un polycondensat de
a1) un dimère d'un alcool gras, et
a2) un dimère d'un acide gras,
et
b) un ester d'acide gras époxydé servant d'agent de réticulation,
dans laquelle le polycondensat et l'ester d'acide gras époxydé sont capables de réagir l'un avec l'autre.

2. Adhésif à base biologique pouvant être obtenu par réaction de
a) un polycondensat de
a1) un dimère d'un alcool gras, et
a2) un dimère d'un acide gras,
et
b) un ester d'acide gras époxydé servant d'agent de réticulation.

3. Composition ou adhésif selon la revendication 1 ou 2, lequel ou laquelle
a1) contient en outre un diol hydrocarboné saturé contenant 3 à 10 atomes de carbone, un trimère d'un alcool gras, et/ou du glycérol ; et/ou
a2) contient en outre un acide dicarboxylique hydrocarboné saturé contenant 3 à 10 atomes de carbone, et/ou un trimère d'un acide gras.

4. Composition ou adhésif selon l'une quelconque des revendications 1 à 3, dans lequel l'alcool gras a de 14 à 22 atomes de carbone.

5. Composition ou adhésif selon l'une quelconque des revendications 1 à 4, dans lequel le dimère ou trimère d'un alcool gras peut être obtenu par hydrogénation d'un dimère ou trimère d'acide oléique, d'acide linoléique, d'acide palmitoléique, d'acide linolénique, d'acide éléostéarique, d'acide ricinoléique, d'acide vernolique, d'acide licanique, d'acide myristoléique, d'acide margaroléique, d'acide gadoléique, d'acide éicosadiénoique et/ou d'acide érucique.

6. Composition ou adhésif selon l'une quelconque des revendications 1 à 5, dans lequel l'acide gras a de 18 à 22 atomes de carbone.

7. Composition ou adhésif selon l'une quelconque des revendications 1 à 6, dans lequel l'acide gras est choisi dans l'ensemble constitué par l'acide oléique, l'acide linoléique, l'acide palmitoléique, l'acide linolénique, l'acide éléostéarique, l'acide ricinoléique, l'acide vernolique, l'acide licanique, l'acide myristoléique, l'acide margaroléique, l'acide gadoléique, l'acide éicosadiénoique et/ou l'acide érucique.

8. Composition ou adhésif selon l'une quelconque des revendications 1 à 7, dans lequel l'ester d'acide gras époxydé est un triglycéride époxydé.

9. Composition ou adhésif selon la revendication 8, dans lequel le triglycéride est un triglycéride d'huile de lin, d'huile de soja, d'huile de ricin, d'huile de palmiste, d'huile de tournesol, d'huile de maïs, d'huile de coton, d'huile de périlla, d'huile de colza, d'huile d'olive et/ou d'huile de canola, d'huile de palme, d'huile de coco, d'huile de riz, d'huile de carthame, d'huile de sésame, de tallol, et de leurs mélanges.

10. Composition ou adhésif selon l'une quelconque des revendications 1 à 9, dans lequel le nombre de groupes époxy dans l'ester d'acide gras époxydé est situé dans la plage allant de 2 à 6.

11. Adhésif selon l'une quelconque des revendications 2 à 9, ayant une température de transition vitreuse (Tg) inférieure ou égale à -20°C.

12. Adhésif selon l'une quelconque des revendications 2 à 10, ayant un nombre de groupes carboxyle libres situé dans la plage allant de 1 à 150 mg KOH/g.

13. Procédé pour préparer l'adhésif à base biologique des revendications 2 à 12, comprenant l'opération consistant à faire réagir, dans un solvant, de
a) un polycondensat de
a1) un dimère d'un alcool gras, et
a2) un dimère d'un acide gras,
et
b) un ester d'acide gras époxydé servant d'agent de réticulation.

14. Utilisation de l'adhésif selon l'une quelconque des revendications 2 à 12 pour stratifier une feuille ou un film.

15. Utilisation selon la revendication 14, dans laquelle la feuille ou le film est fait à partir de poly(téréphtalate d'éthylène), polyéthylène, poly(chlorure de vinyle), polypropylène, cellulose, amidon et/ou poly(acide lactique).
